# EUROPEAN PATENT APPLICATION

(11) **EP 3 401 857 A1**
(43) Date of publication of application: **14.11.2018**
(21) Application number: 17882264.9
(22) Date of filing: 23.06.2017
(51) Int. Cl.: G06Q 10/06

(54) **DATA AUDITING METHOD AND APPARATUS, MOBILE TERMINAL, AND COMPUTER-READABLE STORAGE MEDIUM**

(30) Priority: 17.03.2017 CN 201710169229
(71) Applicant: Ping An Technology (Shenzhen) Co., Ltd., Shenzhen, Guangdong 518000 (CN)
(72) Inventor: CAI, Ning, Shenzhen Guangdong 518000 (CN); XIONG, Wei, Shenzhen Guangdong 518000 (CN); JIN, Yanhua, Shenzhen Guangdong 518000 (CN); FANG, Xiao, Shenzhen Guangdong 518000 (CN); QIU, Yi, Shenzhen Guangdong 518000 (CN)
(74) Representative: Osterhoff, Utz
(86) International application number: PCT/CN2017/089799
(87) International publication number: WO 2018/166098

(57) **Abstract**

Disclosed is a method for investigating data, the method including: starting an investigation application program preinstalled on a mobile terminal, receiving an investigation request in a display interface of the investigation application program, and determining whether a corresponding initiator of the investigation request is a predetermined investigating role; receiving an assignment instruction to assign the investigation task when the corresponding initiator of the investigation request is the predetermined investigating role and a corresponding investigation task of the investigation request is a predetermined task; and performing a corresponding transfer or assignment of the investigation task after determining the investigation task needs to be transferred or assigned, when the corresponding initiator of the investigation request is the predetermined investigating role and the corresponding investigation task of the investigation request is not the predetermined task. Also disclosed are a device, a mobile terminal, and a computer-readable storage medium for investigating data. By the preinstalled investigation application program in the mobile terminal, the investigated cases can be processed in a real time manner, resulting in improved convenience and efficiency of data investigation.

## Description

The present application claims priority to China Patent Application No. 201710169229.1, filed on March 17, 2017 to the State Intellectual Property Office and entitled "Method and Device for Investigating Data", the entirety of which is hereby incorporated by reference.

### TECHNICAL FIELD

The present application relates generally to insurance technical fields, and more particularly relates to a method and a device for investigating data, a mobile terminal, and a computer-readable storage medium.

### BACKGROUND

In the course of processing an insurance claim, the insuring party typically needs to dispatch an investigator to a designated place such as a hospital or an accident site to perform a corresponding investigation. During the process of performing an investigation task, the investigator usually needs to bring along relevant investigation materials, a notebook, and so on, and then carry out an on-site investigation when arriving at the designated investigation spot. After completion of the on-site investigation, the investigator needs to return to the company to fill in the investigation results, which however can only be done after sorting out the investigation matters recorded on the site. This makes the investigation carried out by the investigator exceedingly cumbersome, resulting in inconvenience to the investigator and relatively low investigation efficiency.

### SUMMARY

The present application provides a method and a device for investigating data, a mobile terminal, and a computer-readable storage medium, which improve the convenience and efficiency of investigating data.

There is disclosed a method for investigating data, the method including the following processes: starting an investigation application program preinstalled on a mobile terminal, receiving an investigation request in a display interface of the investigation application program, and determining whether a corresponding initiator of the investigation request is a predetermined investigating role; when the corresponding initiator of the investigation request is the predetermined investigating role and the corresponding investigation task of the investigation request is a predetermined task, an assignment instruction is received to assign the investigation task; receiving an assignment instruction and assigning the investigation task, when the corresponding initiator of the investigation request is the predetermined investigating role and the corresponding investigation task of the investigation request is a predetermined task;

There is also disclosed a device for investigating data, the device including: a determination module configured for starting an investigation application program preinstalled on a mobile terminal, receiving an investigation request in a display interface of the investigation application program, and determining whether a corresponding initiator of the investigation request is a predetermined investigating role; a receiving module configured for receiving an assignment instruction and assigning the investigation task, when the corresponding initiator of the investigation request is the predetermined investigating role and the corresponding investigation task of the investigation request is a predetermined task; and an execution module configured for performing a corresponding transfer or assignment of the investigation task after determining the investigation task needs to be transferred or assigned, when the corresponding initiator of the investigation request is the predetermined investigating role and the corresponding investigation task of the investigation request is not the predetermined task.

There is further disclosed a mobile terminal that includes a processor and a memory, the processor being configured for executing a data investigation program stored in the memory, in order to perform the following operations: starting an investigation application program preinstalled on a mobile terminal, receiving an investigation request in a display interface of the investigation application program, and determining whether a corresponding initiator of the investigation request is a predetermined investigating role; receiving an assignment instruction and assigning the investigation task, when the corresponding initiator of the investigation request is the predetermined investigating role and the corresponding investigation task of the investigation request is a predetermined task; performing a corresponding transfer or assignment of the investigation task after determining the investigation task needs to be transferred or assigned, when the corresponding initiator of the investigation request is the predetermined investigating role and the corresponding investigation task of the investigation request task is not the predetermined task.

There is still further disclosed a computer-readable storage medium storing one or more programs that are executable by one or more processors to perform the following operations: starting an investigation application program preinstalled on a mobile terminal, receiving an investigation request in a display interface of the investigation application program, and determining whether a corresponding initiator of the investigation request is a predetermined investigating role; receiving an assignment instruction and assigning the investigation task, when the corresponding initiator of the investigation request is the predetermined investigating role and the corresponding investigation task of the investigation request task is a predetermined task; and performing a corresponding transfer or assignment of the investigation task after determining the investigation task needs to be transferred or assigned, when the corresponding initiator of the investigation request is the predetermined investigating role and the corresponding investigation task of the investigation request is not the predetermined task.

In accordance with various embodiments in the present application, after a preinstalled investigation application program in the mobile terminal is opened and an investigation request is received in the display interface of the investigation application program, if the corresponding initiator of the investigation request is the predetermined investigating role and the corresponding investigation task of the investigation request is the predetermined task, then an assignment instruction would be received to assign the investigation task. Otherwise if the corresponding initiator of the investigation request is the predetermined investigating role but the corresponding investigation task of the request task is not the predetermined task, then after determining that the investigation task needs to be transferred or assigned, a corresponding operation would be performed to transfer or assign the investigation task. Therefore, the investigator can take his mobile terminal to the investigation spot and carry out an investigation in such a way, so that with the help of the preinstalled investigation application program in the mobile terminal, the investigated cases may be processed in a real time manner, resulting in improved convenience and efficiency of the investigating data.

### BRIEF DESCRIPTION OF THE ACCOMPANYING DRAWINGS

FIG. 1 is an illustrative flowchart of a first embodiment of a method for investigating data in accordance with the present application.
FIG. 2 is an illustrative flowchart of a second embodiment of a method for investigating data in accordance with the present application.
FIG. 3 is an illustrative block diagram of a first embodiment of a device for investigating data in accordance with the present application.
FIG. 4 is an illustrative block diagram of a second embodiment of a device for investigating data in accordance with the present application.
FIG. 5 is a schematic diagram illustrating hardware operating environment of a mobile terminal involved in the technical solutions reflected in various embodiments of the present application;

Various implementations, functional features, and advantages in accordance with the present application will now be described in further detail with reference to some illustrative embodiments as well as accompany drawings.

### DETAILED DESCRIPTION OF ILLUSTRATIVE EMBODIMENTS

It will be appreciated that the specific embodiments described herein are merely illustrative of the application and are not intended to limit the application.

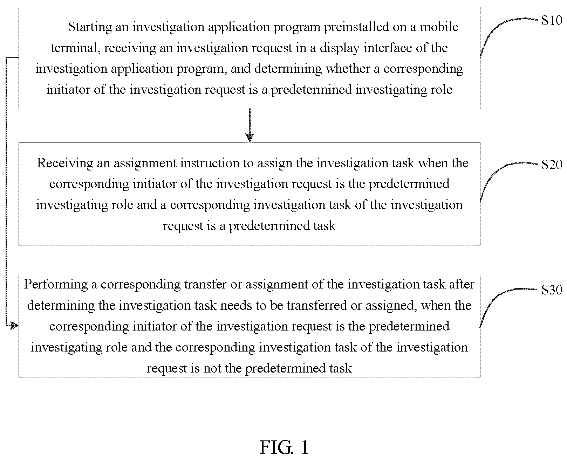

Referring to FIG. 1, there is shown an illustrative flowchart of a first embodiment of a method for investigating data (hereinafter also interchangeably referred to as data investigation method) in accordance with the present application. The method according to this embodiment includes the following blocks which begin at block S10.

In S10, an investigation application program preinstalled on a mobile terminal is started. Then an investigation request is received in a display interface of the investigation application program, and it is further determined whether a corresponding initiator of the investigation request is a predetermined investigating role.

In the present embodiment, the method for investigating data can be applied to a mobile terminal, and a type of the mobile terminal may be set according to actual needs. For example, the mobile terminal may include a mobile phone, a tablet computer, and so on.

An investigation application program (i.e., APP) may be preinstalled in the mobile terminal for, e.g., recording data investigation results. Typically, in processing an insurance claim, the insuring party needs to dispatch an investigator to a designated place such as a hospital or an accident site to perform a corresponding investigation. In this case, the investigator can bring along his mobile terminal to the investigation spot and record the investigation results in a timely fashion. The insurance may come in various types according to actual needs; for example, the type of insurance may be a critical illness medical insurance.

Data investigation may include settlement investigation, medical investigation, voluntary investigation, and so on. Settlement investigation is an investigation initiated by a claims settler when the claims settler has found there is a problem with the settlement information during the process of examining a settlement. Medical investigation is an investigation initiated by a supervisor or investigator on a regular basis for investigating hospitals. Voluntary investigation is an investigation independently initiated by the supervisor or investigator for investigating an insured person, or for a second investigation of the settlement task, and so on.

Specifically, after installing the investigation application program on the mobile terminal, the investigator can use the mobile terminal to record the investigation results on site. First, the mobile terminal is booted up and the investigation application program is launched to detect whether an investigation request is received in a display interface of the investigation application program. When detecting an investigation request has been received in the display interface of the investigation application program, it is then determined whether a corresponding initiator of the investigation request is the predetermined investigating role. The predetermined investigating role may be an investigation supervisor; in the following detailed description the investigation supervisor will be taken as an example. In addition, an investigation main task number may also be generated to facilitate the recording of an investigation status based on the investigation main task number.

After determining the corresponding initiator of the investigation request is not the investigation supervisor, then this investigation main task would enter a status of waiting for assignment. A designated investigation supervisor then decides whether the investigation main task needs to be performed. If it needs to be performed, the mobile terminal determines whether the corresponding investigation task of the investigation request is a predetermined task upon receiving the message indicating that the investigation needs to be performed. The predetermined task may be a medical investigation; in the following detailed description the medical investigation will be taken as an example. In such an example, if the corresponding investigation task of the investigation request is a medical investigation, then an assignment instruction input by the designated investigation supervisor is received and sub-tasks are thus assigned in accordance with the assignment instruction for the purpose of performing the investigation task. Otherwise if the corresponding investigation task of the investigation request is not a medical investigation, then it would be determined whether the corresponding investigation task of the investigation request needs to be transferred out or assigned, and a corresponding operation would then be performed according to the determination. When the investigation task does not need to be performed, then after receiving the message that the investigation task needs not to be performed, the mobile terminal would determine whether to conclude the investigation. If the investigation is to be concluded, then the processing of the investigation request can be chosen to be completed. Otherwise if the investigation is not to be concluded, it is determined whether the investigation task is a medical investigation after receiving the message that the investigation needs to be performed, and subsequent operations would be performed according to the determination. The method then proceeds to block S20.

In S20, when the corresponding initiator of the investigation request is the predetermined investigating role and the corresponding investigation task of the investigation request task is the predetermined task, an assignment instruction is received to assign the investigation task.

Since medical investigation cannot be transferred out, a special treatment is required for the medical investigation. When the corresponding initiator of the investigation request as described supra is the investigation supervisor, then it would be determined whether a corresponding investigation task of the investigation request is a medical investigation. When the investigation task is a medical investigation, the investigation supervisor would assign subtasks to be performed on an individual basis for the overall purpose of accomplishing the investigation task. After receiving the assignment instruction, the mobile terminal would assign the investigation task. The method then continues to block S30.

In S30, when the corresponding initiator of the investigation request is the predetermined investigating role and the corresponding investigation task of the investigation request is not the predetermined task, a corresponding transfer or assignment of the investigation task is performed after determining the investigation task needs to be transferred or assigned.

When the corresponding initiator of the investigation request is the investigation supervisor, then it is determined whether the corresponding investigation task of the investigation request is a medical investigation. If the investigation task is not a medical investigation, then it may further be determined whether the investigation task needs to be transferred or assigned. After determining the investigation task needs to be transferred or assigned, a corresponding operation can be performed to transfer or assign the investigation task.

By the preinstalled investigation application program on the mobile terminal the following operations can be performed: applying for an investigation task, assigning an investigation task, feeding back investigation results, reviewing investigation results, and querying investigation task information. After completion of an on-site investigation, the investigator needs not to wait till he returns to his office location to fill in the investigation results. This allows the investigator to process investigation cases in real time, lead to improved feedback time-efficiency.

It should be noted that during the investigation process the rights over various administrative regions can be controlled; after receiving a configuration instruction, the mobile terminal may assign administrative authorities to various insured regions in accordance with the configuration instruction. After the assignment of the investigation administrative authorities has been completed, then when a query request input by a user is received the corresponding user of the query request is determined as to whether he possesses query permission based on query request. If the user has query permission, then corresponding data is retrieved from a server based on the query request. Otherwise if the user has no query permission, then a corresponding alert message would be displayed. Thereby, when querying an investigation task, the user can search for details of all investigation tasks under the current administrative region to which the user belongs. In addition, the investigation administrative authorities of the various insured regions can also be reassigned according to actual needs.

In regard to settings of investigation administrative authorities, the investigation administrative authorities of various insured regions can also be assigned to multiple institutions, and one institution may possess the investigation administrative authorities over several administrative regions at the same time. The investigation administrative authorities over the insured regions belonging to one same institution can be so assigned to various investigators that one same investigator may be responsible for a number of insured regions while one same administrative region may be handled by multiple investigators. When the local investigation supervisor transfers the investigation task to a different administrative region than his own for investigation, then the investigation task can be directly pushed to a corresponding terminal of the investigation supervisor possessing administrative authority over the target administrative region, there waiting to be assigned.

In accordance with this embodiment, after a preinstalled investigation application program in the mobile terminal is opened and an investigation request is received in a display interface of the investigation application program, if the corresponding initiator of the investigation request is the investigation supervisor and the corresponding investigation task of the investigation request is a medical investigation, then an assignment instruction would be received to assign the investigation task. Otherwise if the corresponding initiator of the investigation request is the investigation supervisor but the corresponding investigation task of the investigation request is not a medical investigation, then a corresponding operation would be performed to transfer or assign the investigation task after determining the investigation task needs to be transferred out or assigned. Therefore, the investigator can carry his mobile terminal to the investigation spot and carry out an investigation. With the help of the preinstalled investigation application program in the mobile terminal, the investigated cases can be processed in real time, resulting in improved convenience and efficiency of investigating data.

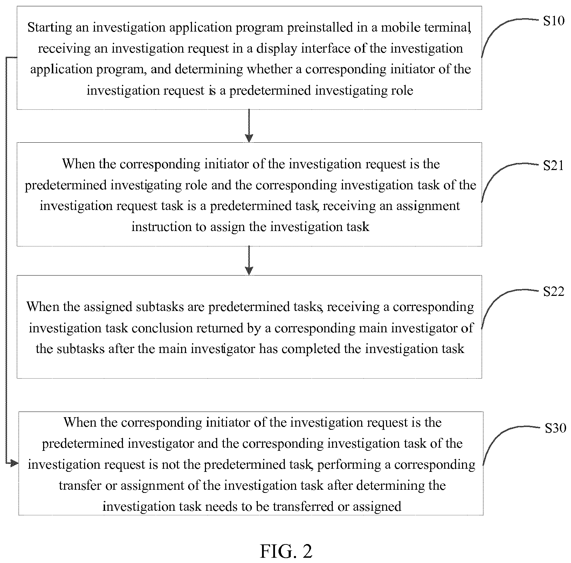

As illustrated in FIG. 2, there is further provided a second embodiment of the method for investigating data based on the first embodiment of the data investigation method. In the second embodiment block S20 as described above includes the following blocks S21 and S22.

In S21, the assignment instruction is received to assign multiple different subtasks, and these assigned subtasks are further determined as to whether they are predetermined tasks.

In S22, when the subtasks are the predetermined tasks, a corresponding investigation task conclusion returned from a corresponding main investigator of the subtasks is received after the main investigator completes the investigation task.

In the present embodiment, when a corresponding initiator of the investigation request is the investigation supervisor and the corresponding investigation task of the investigation request task is a medical investigation, then during the process of assigning the investigation task in accordance with the received assignment instruction, the mobile terminal would first receive the assignment instruction and assign multiple different subtasks according to the assignment instruction, and then determine whether the multiple assigned subtasks are the predetermined tasks respectively. When the subtasks are the medical investigation, then the main investigator would return an investigation task conclusion; that is, after the corresponding main investigator of the subtasks has completed the investigation task, the corresponding investigation task conclusion returned from the main investigator will be received. When the subtasks are not the medical investigation, the following operations may be performed: determining whether a locally performed subtask is returned by the main investigator, determining whether a subtask is applied for by the main investigator, and/or determining whether the main investigator reviews the subtask submitted by the investigation supervisor in a different administrative region. Then corresponding subsequent operations will be performed according to the determination results.

After receiving the corresponding investigation task conclusion returned from the main investigator, it is further determined whether the investigation task conclusion is made and returned by a designated investigating role. If the investigation task conclusion is made and returned by the designated investigating role, then it is determined whether an investigation is initiated by a settlement. If the investigation is initiated by the settlement, then the settlement is unlocked; otherwise if the investigation is not initiated by the settlement, then the investigation would be completed. If the investigation task conclusion is not made and returned by the designated investigating role, then the investigation task would be returned to the designated investigating role for reassignment of subtasks for performance, where the designated investigator may be a first investigation supervisor or may also be set flexibly according to actual needs.

According to this embodiment, after receiving the assignment instruction to assign multiple different subtasks, the mobile terminal would receive the corresponding investigation task conclusion returned by the main investigator when the assigned subtasks belong to medical investigation. Otherwise when the assigned subtasks don't belong to medical investigation, different determination operations are performed and subsequent operations are performed according to the determination results. Thus, during the investigation process the mobile terminal can assign subtasks fulfilling parallel processing of the investigation task; that is, multiple investigators can simultaneously perform investigation on the same case. As such, the investigated case will be completed after all the investigators finish their respective investigations, thereby speeding up the investigation feedback and improving the flexibility of investigation.

There is further provided a third embodiment of the data investigation method based on the above second embodiment of the data investigation method. In the third embodiment, the following operations are further performed subsequent to determining whether the assigned subtasks are the predetermined tasks. When the assigned subtasks are not the predetermined tasks, it is determined the locally performed subtask is returned by the main investigator. When the locally performed subtask is returned by the main investigator, an investigation result returned from an auxiliary investigator is received. When the locally performed subtask is not returned by the main investigator, then it's determined whether all the subtasks have been submitted except the subtask performed by the main investigator. If not all the subtasks have been submitted, then a related alert message is output indicating that not all the subtasks have been submitted; otherwise if all the subtasks have been submitted, then the corresponding investigation task conclusion returned from the main investigator would be received.

In the present embodiment, when the locally performed subtask is returned by the main investigator, then the investigation task will be performed by an auxiliary investigator, and the mobile terminal will receive the investigation result returned from the auxiliary investigator. When the locally performed subtask is not returned by the main investigator, then the investigation task will be performed by the main investigator, and the mobile terminal would determine whether all the subtasks have been submitted except the subtask performed by the main investigator. When not all the subtasks have been submitted, a related alter message that not all the subtasks have been submitted is output, in order to remind the relevant investigators for timely processing. When all the subtasks have been submitted, the corresponding investigation task conclusion returned from the main investigator is received. After receiving the corresponding investigation task conclusion returned from the main investigator, it is further determined whether the investigation task conclusion is made and returned by the designated investigating role- if the investigation task conclusion is made and returned by the designated investigating role, then it would be further determined whether the investigation is initiated by a settlement. If the investigation is initiated by a settlement, then the settlement would be unlocked; otherwise if the investigation is not initiated by a settlement, then the investigation would be completed. If the investigation task conclusion is not made and returned by the designated investigating role, then the investigation task will be returned to the designated investigating role for reassignment and performance of subtasks.

According to the present embodiment, after determining the locally performed subtask is returned by the main investigator, the mobile terminal would receive the investigation result returned from the auxiliary investigator. Otherwise when determining the locally performed subtask is not returned by the main investigator and all the subtasks have been submitted, then the mobile terminal would receive the corresponding investigation task conclusion from the main investigator. Therefore, the investigators can be flexibly arranged to perform the investigation task, improving the investigation efficiency.

Still there is further provided a fourth embodiment of the data investigation method based on the above second embodiment of the data investigation method. In the fourth embodiment, of the following operations are further performed subsequent to determining whether the assigned subtasks are the predetermined tasks When the assigned subtasks are not the predetermined tasks, it is then determined whether the a subtask is applied for by the main investigator. When determining the subtask is applied for by the main investigator, the main investigator is further determined as to whether he is to return the performed subtask. If the main investigator is to return the performed subtask, it is determined again whether a subtask is applied for by the main investigator; otherwise if the main investigator is not to return the performed subtask, a transfer or assignment would be performed. When the main investigator doesn't apply for a subtask, then it is determined whether all the subtasks have been submitted except the subtask performed by the main investigator. If not all the subtasks have been submitted, then a related alert message would be output noting that not all the subtasks have been submitted; otherwise if all the subtasks have been submitted, then the corresponding investigation task conclusion returned from the main investigator would be received.

In the present embodiment, during the process of determining whether the a subtask is applied for by the main investigator, the mobile would determine whether the designated investigating role is to return the performed subtask upon receiving the information that a subtask is applied for by the main investigator, where the designated investigating role may be the main investigator. When the main investigator is to return the performed subtask, it may be determined again whether a subtask is applied for by the main investigator; otherwise when the main investigator is not to return the performed subtask, it is then determined whether the investigation subtask needs to be transferred or assigned. When the investigation subtask needs to be transferred or assigned, a transfer instruction input by the main investigator would be received to transfer the investigation subtask. When the investigation task needs to be assigned, then an assignment instruction input by the main investigator would be received to assign the investigation subtask, and the investigation result returned from the auxiliary investigator or an expert who performs the investigating subtask would then be received.

When no information is received indicating that the main investigator does not apply for a subtask, then it is determined whether all the subtasks have been submitted except the subtask performed by the main investigator. When not all the subtasks have been submitted, a related alert message would be output noting that not all the subtasks have been submitted, so as to remind the relevant investigators for timely processing. When all the subtasks have been submitted, the corresponding investigation task conclusion returned from the main investigator is received. After receiving the corresponding investigation task conclusion returned from the main investigator, it is then determined whether the investigation task conclusion is made and returned by the designated investigating role. If the investigation task conclusion is made and returned by the designated investigating role, then it is determined whether the investigation is initiated by a settlement. If the investigation is initiated by a settlement, then the settlement would be unlocked; otherwise if the investigation is not initiated by a settlement, then the investigation would be completed. If the investigation task conclusion is not made and returned by the designated investigating role, then the investigation task would be returned to the designated investigator for reassignment and performance of subtasks.

In the present embodiment, when a subtask is applied for by the main investigator and the main investigator doesn't return the performed subtask, then a transfer or assignment would be performed; otherwise when the main investigator doesn't apply for a subtask and all the subtasks have been submitted, then a corresponding investigation task conclusion returned from the main investigator would be received. Thereby, the investigation tasks can be assigned in a flexible manner, resulting in improved convenience of investigation.

Still there is further provided a fifth embodiment of the data investigation method based on the second embodiment of the data investigation method. In the fifth embodiment, of the following operations are further included subsequent to determining whether the assigned subtasks are the predetermined tasks. When the assigned subtasks are not the predetermined tasks, it is determined whether the main investigator reviews the subtask submitted by a predetermined investigating role in a foreign region (herein also interchangeably referred to as foreign-region investigating role) than the main investigator. When the main investigator reviews the subtask submitted by the predetermined investigating role in the foreign region, then it is determined whether there is a foreign-region auxiliary investigation task. If no foreign-region auxiliary investigation task exist, then it is determined the predetermined investigating role in the foreign region has completed the feedback. If there is a foreign-region auxiliary investigation task, then the subtask returned from the auxiliary investigator in the foreign region (herein also interchangeably referred to as foreign-region auxiliary investigator) is received when there is the predetermined investigating role in the foreign region (herein also interchangeably referred to as foreign-region predetermined investigating role) that performs the review; otherwise when there is no predetermined investigating role in the foreign region that performs the review, then it is determined that the predetermined auxiliary investigating role in the foreign region has completed the feedback.

When the main investigator doesn't review the subtask submitted by the predetermined investigating role in the foreign region, it is determined whether all the subtasks have been submitted except the subtask performed by the main investigator. If not all the subtasks have been submitted, a related alert message would be output noting that not all the subtasks have been submitted; otherwise if all the subtasks have been submitted, the corresponding investigation task conclusion returned from the main investigator would be received.

In the present embodiment, when the mobile terminal receives the information that the main investigator reviews the subtask submitted by the investigation supervisor of the foreign region, it is first determined whether there is a foreign-region auxiliary investigation task. If there is no auxiliary investigation task, then it is determined that the investigation feedback of the investigation supervisor of the foreign region is complete. If there is a foreign-region auxiliary investigation task, then subtasks returned from an auxiliary investigator of the foreign region is received when there is an investigation supervisor of the foreign region doing the review; otherwise when there is no investigation supervisor of the foreign region doing the review, the feedback from the foreign-region investigation supervisor would be considered to be completed.

When the main investigator has not reviewed the subtask submitted by the foreign-region investigation supervisor, it is first determined whether all the subtasks have been submitted except the subtask performed by the main investigator. When not all the subtasks have been submitted, a relevant alert message will be output noting that not all subtasks have been submitted, so as to remind the relevant investigators for timely processing. When all the subtasks have been submitted, a corresponding investigation task conclusion returned from the main investigator is received. After receiving the corresponding investigation task conclusion returned from the main investigator, it is further determined whether the investigation task conclusion is made and returned by the designated investigating role. If the investigation task conclusion is made and returned by the designated investigator, it is then determined whether the investigation is initiated by a settlement. If the investigation is initiated by a settlement, then the settlement would be unlocked; otherwise if the investigation is not initiated by a settlement, then investigation is completed. If the investigation task conclusion is not made and returned by the designed investigator, then the investigation task would be returned to the designated investigating role for reassignment and performance of subtasks.

In the present embodiment, when the main investigator has reviewed the subtask submitted by the foreign-region investigation supervisor, if there is no foreign-region auxiliary investigation task, and there is the foreign-region investigation supervisor doing the review, the subtasks returned from the foreign-region auxiliary investigator would be received, otherwise if there is no foreign-region investigation supervisor doing the review, then the feedback of the foreign-region investigation supervisor is considered to be completed. When the main investigator hasn't reviewed the subtask submitted by the foreign-region investigation supervisor and all the subtasks have been submitted, then a corresponding investigation task conclusion returned from the main investigator is received. Thus, the mobile terminal can assign investigation tasks in a flexible manner, resulting in improved efficiency and convenience of investigation.

Still there is further provided a sixth embodiment of the data investigation method based on any one embodiment of the first to fifth embodiments of the data investigation method. In the sixth embodiment, the following operations are further included subsequent to the above block S10. When the corresponding initiator of the investigation request is not the predetermined investigating role, then a target investigating role whose administrative region authority corresponds to the insurance institution to which an insurance policy associated with the settlement belongs, then the corresponding investigation task of the investigation request will be pushed to the corresponding terminal of the target investigating role for assignment. Otherwise when failing to acquire the corresponding target investigating role, the investigation task will then be pushed to a predetermined administrative investigating role of an upper-level administrative region for assignment.

In the present embodiment, the investigation administrative authorities can be set. In administrative region authority control in the investigation of a critical illness medical insurance claim, for example, due to the special policy based on critical illness medical claims service, various provinces, municipalities and districts / counties may have different levels and dimensions of coordination policies. Therefore, in the claims service of critical illness medical system, the nationally-accepting operating mode has be launched based on the various administrative regions planned as a whole all over the country so as to provide full support to the critical illness treatment settlement services that have been covered in various regions of the critical illness medical system.. After accepting an investigation case, according to the administrative region of an insured person corresponding to the investigation case, persons in charge of the various administrative regions can perform the subsequent claim operations such as bill entry, check, recheck, breaking the previous institution-based data access management and control mode. Under the organization's data access control efforts, the administrative regions under jurisdiction can be configured in a personalized manner. And during the process of assigning the various administrative regions, it is necessary to follow the superior-subordinate relationships of the institutions and of the administrative regions for combinatorial configuration. When the configuration of the institutions and the administrative regions has been completed, the data access of the investigators under the institution can be refined to the specific administrative regions under jurisdiction of the institution, so that during the investigation process, the critical illness claims service for the insured can be optimized and subsequently managed in a targeted manner. For example, the investigation management authorities of various insurance regions can be assigned to various institutions and one same institution can possess the investigation management authorities of multiple administrative regions at the same time.

Specifically, after completion of configuration of the investigation management authorities of the various administrative regions, when the corresponding initiator of the investigation request received by the mobile terminal is not the investigation supervisor, a target investigation supervisor whose administrative region authority corresponds to the insurance institution to which an insurance policy associated with the settlement belongs will be found, and then the corresponding investigation task of the investigation request will be pushed to the corresponding terminal of the target investigation supervisor for assignment Otherwise when failing to find the corresponding target investigation supervisor, the investigation task would then be pushed to the administrative investigation supervisor of the upper-level administrative region for assignment.

When the investigation supervisor transfers the investigation task to a foreign region to be performed, then the investigation task may be directly pushed to the corresponding terminal of the investigation supervisor having the service authority of the target administrative region for assignment. When the user queries the investigation task, details of all the investigation tasks under the current administrative region to which the user belongs can be queried.

The present embodiment can acquire the target investigation supervisor whose administrative region authority corresponds to the insurance institution to which the insurance policy associated with the settlement belongs, and then push the investigation task to the corresponding terminal of the target investigation supervisor for assignment. Otherwise when failing to acquire the corresponding target investigation supervisor, the investigation task will then be pushed directly to the administrative investigation supervisor of the upper-level administrative region for assignment. This allows the flexible assignment of the investigation administration authorities over the administrative regions under the jurisdiction of the investigators, improving the convenience and efficiency of investigation.

It is apparent to those having ordinary skill in the art that all or part of the operations of the above embodiments can be performed by hardware or by instructing the relevant hardware through a program. The program may be stored in a computer-readable storage medium which may be a read-only memory, a magnetic disk, an optical disc, or the like.

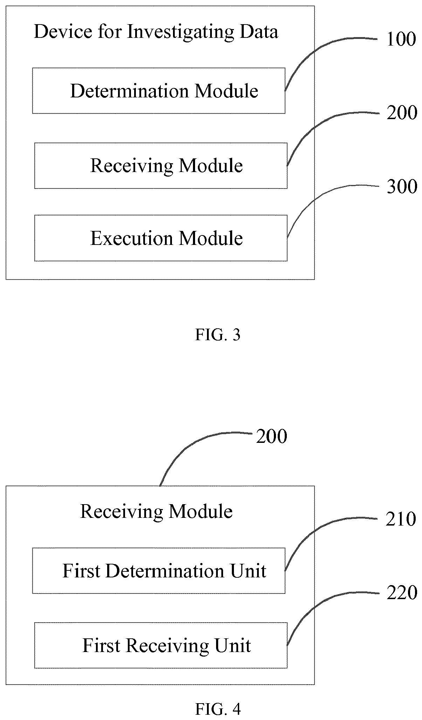

Correspondingly, referring now to FIG. 3, there is disclosed a first embodiment of a device for investigating data in accordance with the present application. The data investigating device according to this embodiment includes: a determination module 100 configured for starting an investigation application program preinstalled on a mobile terminal, receiving an investigation request in a display interface of the investigation application program, and determining whether a corresponding initiator of the investigation request is a predetermined investigating role.

In the present embodiment, the method for investigating data is applied in the mobile terminal; a type of the mobile terminal may be set according to an actual demand. For example, the mobile terminal may include a mobile phone, a tablet computer, and so on.

An investigation application program (i.e., APP) may be preinstalled in the mobile terminal, for, e.g., recording data investigation results. Typically, in processing of an insurance claim, the insuring party needs to dispatch an investigator to a designated place such as a hospital or an accident site to conduct a corresponding investigation. In this case, the investigator may bring along his mobile terminal to an investigation spot and record the investigation results timely. The insurance may be set come in various types according to the actual demand, for example, the type of insurance may be a critical illness medical insurance.

Data investigation may include settlement investigation, medical investigation, voluntary investigation, and so on. Settlement investigation is the investigation imitated by a claims settler when the claims settler has found there is a problem with settlement information during the process of examining a settlement. Medical investigation is an investigation initiated by a supervisor or the investigator on a regular basis for investigating hospitals. Voluntary investigation is an independently investigation initiated by a supervisor or an investigator for investigating an insured person, or for a second investigation of the settlement task and so on.

Specifically, after installing the investigation application program on the mobile terminal, the investigator can use the mobile terminal to record the investigation results on-site. First, the mobile terminal is booted up and the investigation application program is launched, to detect whether an investigation request is received in the display interface of the investigation application program. When detecting an investigation request has been received in the display interface of the investigation application program, the determination module determines whether the corresponding initiator of the investigation request is the predetermined investigating role, the preset investigator may be an investigation supervisor, in the following detailed description in the investigation supervisor will be taken as an example. In addition an investigation main task number may also be generated to facilitate the recording of an investigation status based on the investigation main task number.

After determining the corresponding initiator of the investigation request is not the investigation supervisor then this investigation main task would enter a status of waiting for assignment. A design investigation supervisor then decides whether the investigation main task needs to be executed, if it needs to be executed, the mobile terminal determines whether the corresponding investigation task of the investigation request is a predetermined task upon receiving the message indicating that the investigation needs to be performed. The predetermined task may be medical investigation; in the following detailed description of the medical investigation would be taken as an example. In such an example, if the corresponding investigation task of the investigation request is a medical investigation, then an assignment instruction input by the designated investigation supervisor is received and subtasks are thus assigned in accordance with the assignment instruction for the purpose of performing the investigation task. Otherwise if the corresponding investigation task of the investigation request is not a medical investigation, then it would be determined whether the corresponding investigation task of the investigation request needs to be transferred out or assigned, a corresponding operation would be then performed according to the determination. When the investigation task does not need to be performed, then after receiving the message that the investigation task needs not to be performed, the mobile terminal would determine whether to conclude the investigation. If the investigation is to be concluded, then the processing of the investigation request can be chosen to be completed. Otherwise if the investigation is not to be concluded, it is determined whether the investigation task is a medical investigation after receiving the message that the investigation needs to be performed, and subsequent operations would be performed according to the determination.

A receiving module 200 configured to receive the assignment instruction and assign the investigation task, when the corresponding initiator of the investigation request is the predetermined investigating role and the corresponding investigation task of the investigation request is the predetermined task.

Since medical investigation cannot be transferred out, so a special treatment is required for the medical investigation. When the corresponding initiator of the investigation request as described supra is the investigation supervisor, then it would be determined whether a corresponding investigation task of the investigation request is the medical investigation. When the investigation task is a medical investigation, the investigation supervisor would assign subtasks to be performed on an individual basis for the overall purpose of accomplishing the investigation task. After the receiving module 200 receives the assignment instruction, the mobile terminal would assign the investigation task.

And an execution module 300 configured to perform a corresponding transfer or assignment of the investigation task after determining the investigation task needs to be transferred or assigned, when the corresponding initiator of the investigation request is the predetermined investigating role and the corresponding investigation task of the investigation request is not the predetermined task.

When the investigation task is not the medical investigation, then it may further be determined whether the investigation task needs to be transferred or assigned. After the execution module 300 determined the investigation task needs to be transferred or assigned, a corresponding operation can be performed to transfer or assign the investigation task.

By the preinstalled investigation application program on the mobile terminal the following operations can be performed: applying for an investigation task, assigning an investigation task, feeding back investigation results, reviewing investigation results, and querying the investigation task information. After completion of an on-site investigation, the investigator needs not to wait till he returns to his office location to fill in the investigation results. This allows the investigator to process investigation cases in real time, lead to improved feedback time-efficiency.

It should be noted that during the investigation process the rights over various administrative regions can be controlled; after receiving a configuration instruction, the mobile terminal may assign administrative authorities to various insured regions in accordance with the configuration instruction. After the assignment of the investigation administrative authorities has been completed, then when a query request input by a user is received the corresponding user of the query request is determined as to whether he possesses query permission based on query request. Otherwise if the user has no query permission, then a corresponding alert message would be displayed. Thereby, when querying an investigation task, the user can search for details of all investigation tasks under the current administrative region to which the user belongs. In addition, the investigation administrative authorities of the various insured regions can also be reassigned according to actual needs.

In regard to settings of investigation administrative authorities, the investigation administrative authorities of various insured regions also can be assigned to multiple institutions, and one institution may possess the investigation administrative authorities over several administrative regions at the same time. The investigation administrative authorities over the insured regions belonging to one same institution can be so assigned to various investigators that one same investigator may be responsible for a number of insured regions while one same administrative region may be handled by multiple investigators. When the local investigation supervisor transfers the investigation task to a different administrative region than his own for investigation, then the investigation task can be directly pushed to a corresponding terminal of the investigation supervisor possessing administrative authority over the target administrative region, there waiting to be assigned.

In accordance with this embodiment, after the preinstalled investigation application program in the mobile terminal is opened and the investigation request is received in a display interface of the investigation application program, if the corresponding initiator of the investigation request is the investigation supervisor and the corresponding investigation task of the investigation request is a medical investigation, then an assignment instruction would be received to assign the investigation task. Otherwise if the corresponding initiator of the investigation request is the investigation supervisor but the corresponding investigation task of the investigation request is not a medical investigation, then a corresponding operation would be performed to transfer or assign the investigation task after determining the investigation task needs to be transferred out or assigned. Therefore, the investigator can carry his mobile terminal to the investigation spot and carry out an investigation. With the help of the preinstalled investigation application program in the mobile terminal, the investigated cases can be processed in real time manner, resulting in improved convenience and efficiency of investigating data.

Furthermore, referring to FIG. 4, based on the first embodiment of the device for investigating data, a second embodiment of the device for investigating data is disclosed, in the second embodiment, the receiving module 200 includes: a first determination unit 210 configured to receive assignment instruction to assign a plurality of different subtasks, and then determining whether the assigned subtasks are predetermined tasks; a first receiving unit 220 configured to receive a correspond investigation task conclusion returned from a corresponding main investigator of the subtasks after the main investigator completes the investigation task.

In the present embodiment, when the corresponding initiator of the investigation request is the investigation supervisor and the corresponding investigation task of the investigation request task is a medical investigation, then during a process of assigning investigation task in accordance with the received assignment instruction, the mobile terminal would first, receive the assignment instruction and assign receive the different subtasks according to the assignment instruction, and then the first determination unit 210 determines whether the multiple assigned subtasks are the predetermined tasks respectively. When the subtasks are the medical investigation, then the main investigator would return an investigation task conclusion, that is, after the corresponding main investigator of the subtasks has completed the investigation task, the first receiving unit 220 receives the corresponding investigation task conclusion returned from the main investigator. When the subtasks are not the medical investigation, the following operations may be performed: an execution unit 230 determines whether the a subtask is applied for by the main investigator, and/or determining whether the main investigator reviews the subtask submitted by the investigation supervisor in a different administrative region. Then corresponding subsequent operations will be performed according to the determination results.

After receiving the corresponding investigation task conclusion returned from the main investigator, it is further determined whether investigation task conclusion is made and returned by a designated investigating role, if the investigation task conclusion is made and returned by the designated by the designed investigating role, then it is determined whether an investigation is a settlement. If the investigation is initiated by the settlement, then the settlement is unlocked; otherwise if the investigation is not initiated by the settlement, then the investigation would be completed. If investigation task conclusion is not made and returned by the designated investigating role, then the investigation task would be returned to the designed investigating role for reassignment of subtasks for performance, where the designated investigator may be a first investigation supervisor, or the designed investigator may also be set flexibly according to the actual needs.

According to this embodiment, after receiving the assignment instruction to assign multiple different subtasks, the mobile terminal would receive the corresponding investigation task conclusion returned by the main investigator when the assigned subtasks belong to medical investigation. Otherwise when the assigned subtasks don't belong to medical investigation, different determination operations are performed and subsequent operations are performed according to the determination results. Thus, during the investigation process the mobile terminal can assign subtasks fulfilling parallel processing of the investigation task; that is, multiple investigators can simultaneously perform investigation on the same case. As such, the investigated case will be completed after all the investigators finish their respective investigations, thereby speeding up the investigation feedback and improving the flexibility of investigation.

There is further provided a third embodiment of the data investigation method based on the above second embodiment of the data investigation method. In the third embodiment, a receiving module 200 is further provided and configured to determine whether the assigned subtasks are the predetermined tasks. When the assigned subtasks are not the predetermined tasks, it is determined the locally performed subtask is returned by the main investigator. When the locally performed subtask is returned by the main investigator, an investigation result returned from an auxiliary investigator is received. When the locally performed subtask is not returned by the main investigator, then it's determined whether all the subtasks have been submitted except the subtask performed by the main investigator. If not all the subtasks have been submitted, then a related alert message is output indicating that not all the subtasks have been submitted; otherwise if all the subtasks have been submitted, then the corresponding investigation task conclusion returned from the main investigator would be received.

In the present embodiment, when the locally performed subtask is returned by the main investigator, then the investigation task will be performed by an auxiliary investigator, and the mobile terminal will receive the investigation result returned from the auxiliary investigator. When the locally performed subtask is not returned by the main investigator, then the investigation task will be performed by the main investigator, and the mobile terminal would determine whether all the subtasks have been submitted except the subtask performed by the main investigator. When not all the subtasks have been submitted, a related alter message that not all the subtasks have been submitted is output, in order to remind the relevant investigators for timely processing. When all the subtasks have been submitted, the corresponding investigation task conclusion returned from the main investigator is received. After receiving the corresponding investigation task conclusion returned from the main investigator, it is further determined whether the investigation task conclusion is made and returned by the designated investigating role- if the investigation task conclusion is made and returned by the designated investigating role, then it would be further determined whether the investigation is initiated by a settlement. If the investigation is initiated by a settlement, then the settlement would be unlocked; otherwise if the investigation is not initiated by a settlement, then the investigation would be completed. If the investigation task conclusion is not made and returned by the designated investigating role, then the investigation task will be returned to the designated investigating role for reassignment and performance of subtasks.

According to the present embodiment, after determining the locally performed subtask is returned by the main investigator, the mobile terminal would receive the investigation result returned from the auxiliary investigator. Otherwise when determining the locally performed subtask is not returned by the main investigator and all the subtasks have been submitted, then the mobile terminal would receive the corresponding investigation task conclusion from the main investigator. Therefore, the investigators can be flexibly arranged to perform the investigation task, improving the investigation efficiency.

There is further provided a fourth embodiment of the data investigation method based on the above second embodiment of the data investigation device. In the fourth embodiment, the receiving module 200 also including: a third determination unit configured to determine whether a subtask is applied for by the main investigator when the assigned subtasks are not the predetermined tasks; a second processing unit configured to determine whether the main investigator is to return his performed subtask when a subtask is applied for by the main investigator; if the main investigator is to return his performed subtask, determine again whether the a subtask is applied for by the main investigator; and if the main investigator is not to apply for a subtask, perform a transfer or assignment; a third processing unit configured to determine whether all the subtasks have been submitted except the subtask performed by the main investigator, when the main investigator doesn't apply for a subtask; if not all the subtasks have been submitted, output a related alert message noting not all the subtasks have been submitted; otherwise if all the subtasks have been submitted, receive a corresponding investigation task conclusion returned by the main investigator.

In the present embodiment, during the process of determining whether a subtask is applied for by the main investigator, the mobile would determine whether the designated investigating role is to return the performed subtask upon receiving the information that the a subtask is applied for by the main investigator, where the designated investigating role may be the main investigator.. When the main investigator is to return the performed subtask, the second processing unit may be determined whether a subtask is applied for by the main investigator; when the main investigator is not to return the performed subtasks, it is then determined whether the investigated subtasks needs to be transferred out or assigned. When the investigation subtask needs to be transferred out or assigned, a transfer instruction input by the main investigator would be received by the second processing unit to transfer the investigation subtask. When the investigation subtask needs to be assigned, then the second processing unit may receive an assignment instruction input by the main investigator and receive the investigation result returned from the auxiliary investigator or an expert who performs the investigating subtasks.

When no information is received indicating that of the main investigator does not apply for a subtask, then the third processing unit determines if all the subtasks have been submitted except the subtask performed by the main investigator. When all the subtasks have been submitted, a alert message would be output noting that not all the subtasks have been submitted, so as to remind the relevant investigator to handle for timely processing. When not all the subtasks have been submitted, the corresponding investigation task conclusion returned from the main investigator is received. After receiving the corresponding investigation task conclusion returned from the main investigator, it is then determined whether the investigation task conclusion is made and returned by the designated investigating role. If the investigation task conclusion is made and returned by the designated investigating role, then it is determined whether the investigation is initiated by a settlement. If the investigation is initiated by a settlement, then the settlement would be unlocked; otherwise if the investigation is not initiated by a settlement, then the investigation would be completed. If the investigation task conclusion is not made and returned by the designated investigating role, then the investigation task would be returned to the designated investigator for reassignment and performance of subtasks.

In the present embodiment, when a subtask is applied for by the main investigator and the main investigator doesn't return the performed subtask, then a transfer or assignment would be performed; otherwise when the main investigator doesn't apply for a subtask and all the subtasks have been submitted, then a corresponding investigation task conclusion returned from the main investigator would be received. Thereby, the investigation tasks can be assigned in a flexible manner, resulting in improved convenience of investigation.

Still there is further provided a fifth embodiment of the data investigation device based on the second embodiment of the data investigation method. in the fifth embodiment, the receiving module 200 also including: a fourth determination unit configured to determine whether the main investigator reviews a subtask submitted by a predetermined investigating role in a foreign region, when the assigned subtasks are not the predetermined task; a fourth processing unit configured to determine whether there is an auxiliary investigation task in the foreign region when the main investigator reviews the subtask submitted by the predetermined investigating role in the foreign region; if there isn't an auxiliary investigation task in the foreign region, determine a feedback of the predetermined investigating role in the foreign region is completed; otherwise if there is the auxiliary investigation task in the foreign region, receive the subtask returned by an auxiliary investigator in the foreign region when there is the predetermined investigating role in the foreign region doing the review, or determine a feedback of the predetermined investigating role in the foreign region is completed when there isn't the predetermined investigating role in the foreign region doing the review; a fifth processing unit configured to determine: whether all the subtasks have been submitted except the subtask performed by the main investigator when the main investigator doesn't review the subtask submitted by the predetermined investigating role in the foreign region; if not all the subtasks have been submitted, output a related message noting not all the subtasks have been submitted; otherwise if all the subtasks have been submitted, receive a corresponding investigation task conclusion returned by the main investigator.

In the present embodiment, when the fourth processing unit receives the information of that the main investigator has reviewed the subtasks submitted by the investigation supervisor of the foreign region, first determining whether there is a foreign-region auxiliary investigation task. If no foreign-region auxiliary investigation task exist, then it is determined the predetermined investigating role in the foreign region has completed the feedback. If there is a foreign-region auxiliary investigation task, then the subtask returned from the auxiliary investigator in the foreign region (herein also interchangeably referred to as foreign-region auxiliary investigator) is received when there is the predetermined investigating role in the foreign region (herein also interchangeably referred to as foreign-region predetermined investigating role) that performs the review; otherwise when there is no predetermined investigating role in the foreign region that performs the review, then it is determined that the predetermined auxiliary investigating role in the foreign region has completed the feedback.

When the main investigator doesn't review the subtasks submitted by the predetermined investigating role in the foreign region, first, the fifth processing unit determines whether all the subtasks have been submitted except the subtask performed by the main investigator. If not all the subtasks have been submitted, a related alert message would be output noting that not all the subtasks have been submitted, to remind the relevant investigator to handle in a timely manner; otherwise if all the subtasks have been submitted, the corresponding investigation task conclusion returned from the main investigator would be received. After receiving the corresponding investigation task conclusion returned by the main investigator, it is further determined whether the investigation task conclusion is made and returned by the designated investigating role, If the investigation task conclusion investigation task is examined made and returned by the designated investigator, and it is then determined whether the investigation is initiated by the a settlement.. If the investigation is initiated by a settlement, then the settlement is unlocked; otherwise if the investigation is not initiated by a settlement, then the investigation is completed. If the investigation task conclusion is not made and returned by the designed investigator, then the investigation task would be returned to the designated investigating role for reassignment and performance of subtasks.

In the present embodiment, when the main investigator reviewed the subtask submitted by the foreign-region investigation supervisor, if there is no foreign-region auxiliary investigation task and there is the foreign-region investigation supervisor doing the review, the subtasks returned from the foreign-region auxiliary investigator would be received, otherwise if there is no foreign-region investigation supervisor doing the review, then the feedback of the foreign-region investigation supervisor is considered to be completed. When the main investigator hasn't reviewed the subtask submitted by the foreign-region investigation supervisor and all the subtasks have been submitted, then a corresponding investigation task conclusion returned from the main investigator is received. Thus, the mobile terminal can assign investigation tasks in a flexible manner, resulting in improved efficiency and convenience of investigation.

Still there is further provided a sixth embodiment of the data investigation device based on any one embodiment of the first to fifth embodiments of the data investigation method. the sixth embodiment also including: a pushing module configured to acquire a target investigating role whose administrative region authority corresponds to an insurance institution to which an insurance policy associated with a settlement belongs and push the corresponding investigation task of the investigation request to a corresponding terminal of the target investigating role for assignment, when the corresponding initiator of the investigation request is not the predetermined investigating role; otherwise when the corresponding target investigating role hasn't been acquired, push the investigation task to a predetermined administrative investigating role of an upper-level administrative region for assignment..

In the present embodiment, the investigation administrative authorities can be set. In an administration area authority control in the investigation of a critical illness medical insurance claim. For example, due to a special policy of the critical illness medical insurance, various provinces, municipalities and districts / counties may have different levels and dimensions of coordination policies. Therefore, in the claims service of critical illness medical insurance system, the nationally-accepting operating mode has be launched based on the various administrative regions planned as a whole all over the country so as to provide full support to the critical illness treatment settlement services that have been covered in various regions of the critical illness medical system. After accepting an investigation case, according to the administrative region of an insured person corresponding to the investigation case, persons in charge of the various administrative regions can perform the subsequent claim operations such as bill entry, check, recheck, breaking the previous institution-based data access management and control mode. Under the organization's data access control efforts, the administrative regions under jurisdiction can be configured in a personalized manner. And during the process of assigning the various administrative regions, it is necessary to follow the superior-subordinate relationships of the institutions and of the administrative regions for combinatorial configuration. When the configuration of the institutions and the administrative regions has been completed, the data access of the investigators under the institution can be refined to the specific administrative regions under jurisdiction of the institution, so that during the investigation process, the critical illness claims service for the insured can be optimized and subsequently managed in a targeted manner. For example, the investigation management authorities of various insurance regions can be assigned to various institutions and one same institution can possess the investigation management authorities of multiple administrative regions at the same time.

Specifically, after completion of configuration of the investigation management authorities of the various administrative regions, when the corresponding initiator of the investigation request received by the mobile terminal is not the investigation supervisor, a target investigation supervisor whose administrative region authority corresponds to the insurance institution to which an insurance policy associated with the settlement belongs will be found, and then the corresponding investigation task of the investigation request will be pushed to the corresponding terminal of the target investigation supervisor for assignment Otherwise when failing to find the corresponding target investigation supervisor, the investigation task would then be pushed to the administrative investigation supervisor of the upper-level administrative region for assignment.

When the investigation supervisor transfers the investigation task to a foreign region to be performed, then the investigation task may be directly pushed to the corresponding terminal of the investigation supervisor having the service authority of the target administrative region for assignment. When the user queries the investigation task, details of all the investigation tasks under the current administrative region to which the user belongs can be queried.

The present embodiment can acquire the target investigation supervisor whose administrative region authority corresponds to the insurance institution to which the insurance policy associated with the settlement belongs, and then push the investigation task to the corresponding terminal of the target investigation supervisor for assignment. Otherwise when failing to acquire the corresponding target investigation supervisor, the investigation task will then be pushed directly to the administrative investigation supervisor of the upper-level administrative region for assignment. This allows the flexible assignment of the investigation administration authorities over the administrative regions under the jurisdiction of the investigators, improving the convenience and efficiency of investigation.

In regard to the realization of the hardware, the determination module 100, the receiving module 200, the execution module 300 or the like may be embedded in the hardware or independently from the device of the investigating data, or may be stored in the memory of the device of the investigating data in a form of software, so that the processor invokes to execute corresponding operations of each of the above modules. The processor may be a central processing unit (CPU), a microprocessor, a single chip microprocessor and so on.

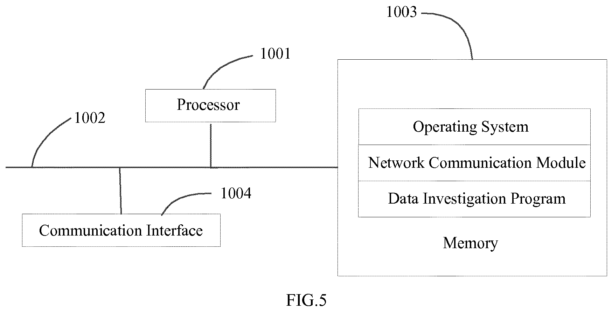

Referring to FIG. 5, FIG. 5 is a schematic diagram illustrating the hardware operating environment of a mobile terminal involved in the technical solutions reflected in various embodiments of the present application.

The mobile terminal in the embodiment of the present application may be a mobile phone, a tablet computer, an E-book reader, a portable computer and other removable terminals having display function.

Referring to FIG. 5, the mobile terminal may include: a processor 1001, a communication bus 1002, a memory 1003 and a communication interface 1004. Among them, the communication bus 1002 configured to realize a connecting-communication between these components. The memory 1003 may be a high-speed RAM memory or a non-volatile memory such as a disc memory. Optionally, the memory 1003 may be a memory device independent from the processor 1001. The communication interface 1004 may include a user interface (not shown in FIG. 5) and/or a network interface (not shown in FIG. 5), therein, the user interface communicates to an input/output device such as a display screen and a keyboard, the network interface configured to communicate to the network, including a wired network and/or a wireless network.

It is apparent to those skilled in the art that a structure of the mobile terminal shown in FIG. 5 is not aimed to limit the mobile terminal, the mobile terminal may include more or fewer components than the components shown in FIG. 5, or a combination of some components, or different assignment of the components.

Referring to FIG. 5, when the memory 1003 acts as a computer storage medium, it may include an operating system, a network communication module, and a data investigation program.

The mobile terminal shown in FIG. 5, the processor 1001 may configure to load a stored data investigation program and perform the following operations: starting an investigation application program preinstalled on the mobile terminal, receiving an investigation request in a display interface of the investigation application program, and determining whether a corresponding initiator of the investigation request is a predetermined investigating role; receiving an assignment instruction and assigning the investigation task, when the corresponding initiator of the investigation request is the predetermined investigating role and the corresponding investigation task of the investigation request task is a predetermined task; performing the corresponding transfer or the corresponding assignment of the investigation task after determining the investigation task needs to be transferred or assigned, when the corresponding initiator of the investigation request is the predetermined investigating role and the corresponding investigation task of the investigation request task is not the predetermined task.

Furthermore, the processor 1001 may be configured to perform the data investigation program stored in the memory 1003 to realize the following operations: receiving the assignment instruction to assign a plurality of different subtasks, and determining whether the assigned subtasks are predetermined tasks; and when the assigned subtasks are the predetermined tasks, receiving a corresponding investigation task conclusion returned from a corresponding main investigator of the subtasks after the main investigator completes the investigation task.

Furthermore, the processor 1001 may be configured to perform the data investigation program stored in the memory 1003 to realize the following operations: when the assigned subtasks are not the predetermined tasks, it is determined the locally performed subtask is returned by the main investigator; when the locally performed subtask is returned by the main investigator, receiving the investigation result returned from the auxiliary investigator; when the locally performed subtask is not returned by the main investigator, determining whether all the subtask have been submitted except the subtasks performed by the main investigator; if not all the subtasks have been submitted, outputting a related alert message noting not all the subtasks have been submitted; otherwise if all the subtasks have been submitted, receiving a corresponding investigation task conclusion returned by the main investigator.

Furthermore, the processor 1001 may be configured to perform the data investigation program stored in the memory 1003 to realize the following operations: when the assigned subtasks are not the predetermined tasks, it is then determined whether a subtask is applied for by the main investigator. When determining a subtask is applied for by the main investigator, the main investigator is further determined as to whether he is to return the performed subtask. If the main investigator is to return the performed subtask, it is determined again whether a subtask is applied for by the main investigator; otherwise if the main investigator is not to return the performed subtask, a transfer or assignment would be performed. When the main investigator doesn't apply for a subtask, then it is determined whether all the subtasks have been submitted except the subtask performed by the main investigator. If not all the subtasks have been submitted, then a related alert message would be output noting that not all the subtasks have been submitted; otherwise if all the subtasks have been submitted, then the corresponding investigation task conclusion returned from the main investigator would be received.

Furthermore, the processor 1001 may be configured to execute the data investigation program stored in the memory 1003 to further perform the following operations subsequent to determining whether the assigned subtasks are the predetermined tasks: when the assigned subtasks are not the predetermined tasks, determining whether the main investigator reviews a subtask submitted by a predetermined investigating role in a foreign region; when the main investigator reviews the subtask submitted by the predetermined investigating role in the foreign region, determining whether there is an auxiliary investigation task in the foreign region; if there isn't an auxiliary investigation task in the foreign region, determining a feedback of the predetermined investigating role in the foreign region is completed; otherwise if there is the auxiliary investigation task in the foreign region, receiving the subtask returned by an auxiliary investigator in the foreign region when there is the predetermined investigating role in the foreign region doing the review, or determining a feedback of the predetermined investigating role in the foreign region is completed when there isn't the predetermined investigating role in the foreign region doing the review; when the main investigator doesn't review the subtask submitted by the predetermined investigating role in the foreign region, determining whether all the subtasks have been submitted except the subtask performed by the main investigator; if not all the subtasks have been submitted, outputting a related alert message noting not all the subtasks have been submitted; otherwise if all the subtasks have been submitted, receiving a corresponding investigation task conclusion returned by the main investigator.

Furthermore, the processor 1001 may be configured to perform the data investigation program stored in the memory 1003 to realize the following operations: when the corresponding initiator of the investigation request is not the predetermined investigating role, acquiring a target investigating role whose administrative region authority corresponds to an insurance institution to which an insurance policy associated with a settlement belongs, pushing the corresponding investigation task of the investigation request to a corresponding terminal of the target investigating role for assignment; otherwise when the corresponding target investigating role hasn't been acquired, pushing the investigation task to a predetermined administrative investigating role of an upper-level administrative region for assignment.

Furthermore, the processor 1001 may be configured to perform the data investigation program stored in the memory 1003 to realize the following operations: when the corresponding initiator of the investigation request is not the predetermined investigating role, acquiring the target investigation supervisor whose administrative region authority corresponds to the insurance institution to which the insurance policy associated with the settlement belongs, and then push the investigation task to the corresponding terminal of the target investigation supervisor for assignment. Otherwise when failing to acquire the corresponding target investigating role, the investigation task will then be pushed directly to the administrative investigation supervisor of the upper-level administrative region for assignment.

In accordance with various embodiments in the present application, after the preinstalled investigation application program in the mobile terminal is opened and the investigation request is received in the display interface of the investigation application program, if the corresponding initiator of the investigation request is the investigation supervisor and the corresponding investigation task of the investigation request is a medical investigation, then an assignment instruction would be received to assign the investigation task. Otherwise if the corresponding initiator of the investigation request is the investigation supervisor but the corresponding investigation task of the investigation request task is not the medical investigation, then a corresponding operation would be performed to transfer or assign the investigation task after determining that the investigation task needs to be transferred or assigned,. Therefore, the investigator can carry his mobile terminal to the investigation spot and carry out an investigation. With the help of the preinstalled investigation application program in the mobile terminal, the investigated cases can be processed in the real time, resulting in improved convenience and efficiency of investigating data.

There is still further disclosed a computer-readable storage medium storing one or more programs that are executable by one or more processors to perform the following operations: starting an investigation application program preinstalled on the mobile terminal, receiving an investigation request in a display interface of the investigation application program, and determining whether a corresponding initiator of the investigation request is a predetermined investigating role; receiving an assignment instruction and assigning the investigation task, when the corresponding initiator of the investigation request is the predetermined investigating role and a corresponding investigation task of the investigation request task is a predetermined task; performing a corresponding transfer or assignment of the investigation task after determining the investigation task needs to be transferred or assigned, when the corresponding initiator of the investigation request is the predetermined investigating role and the corresponding investigation task of the investigation request task is not the predetermined task.

The computer-readable storage medium also configured for receiving an assignment instruction to assign on the investigation task, including: receiving the assignment instruction to assign a plurality of different subtasks, and determining whether the assigned subtasks are predetermined tasks; when the assigned subtasks are the predetermined tasks, receiving a corresponding investigation task conclusion returned from a corresponding main investigator of the subtasks after the main investigator completes the investigation task.

The computer-readable storage medium may be configured for determining whether the subtasks are the predetermined task, including the following operations: executing the data investigation program stored in the memory to further perform the following operations subsequent to determining whether assigned subtasks are the predetermined tasks: when the assigned subtasks are not the predetermined tasks, determining whether a subtask is applied for by the main investigator; when a subtask is applied for by the main investigator, determining whether the main investigator is to return his performed subtask; if the main investigator is to return his performed subtask, determining again whether a subtask is applied for by the main investigator; and if the main investigator is not to apply for a subtask, performing a transfer or assignment; when the main investigator doesn't apply for a subtask, determining whether all the subtasks have been submitted except the subtask performed by the main investigator; if not all the subtasks have been submitted, outputting a related alert message noting not all the subtasks have been submitted; otherwise if all the subtasks have been submitted, receiving a corresponding investigation task conclusion returned by the main investigator

The computer-readable storage medium may be configured for determining whether the subtasks are the predetermined task, including following operations: when the assigned subtasks are not the predetermined tasks, determining whether a subtask is applied for by the main investigator; when the subtasks are applied for by the main investigator, determining whether main investigator returns the performed subtasks; if the main investigator is to return his performed subtask, determining again whether a subtask is applied for by the main investigator; and if the main investigator is not to apply for a subtask, performing a transfer or assignment; when the main investigator doesn't apply for a subtask, determining whether all the subtasks have been submitted except the subtask performed by the main investigator; if not all the subtasks have been submitted, outputting a related alert message noting not all the subtasks have been submitted; otherwise if all the subtasks have been submitted, receiving a corresponding investigation task conclusion returned by the main investigator.

The computer-readable storage medium may be configured for determining whether the subtasks are the predetermined task, including following operations: when the assigned subtasks are not the predetermined tasks, determining whether the main investigator reviews a the subtask submitted by a predetermined investigating role in a foreign region; when the main investigator reviews the subtasks that submitted by the predetermined investigating role in a foreign region, determining whether there is an auxiliary investigation task; if there isn't an auxiliary investigation task in the foreign region, determining a feedback of the predetermined investigating role in the foreign region is completed; otherwise if there is the auxiliary investigation task in the foreign region, receiving the subtask returned by an auxiliary investigator in the foreign region when there is the predetermined investigating role in the foreign region doing the review, or determining a feedback of the predetermined investigating role in the foreign region is completed when there isn't the predetermined investigating role in the foreign region doing the review; when the main investigator doesn't review the subtask submitted by the predetermined investigating role in the foreign region, determining whether all the subtasks have been submitted except the subtask performed by the main investigator; if not all the subtasks have been submitted, outputting a related alert message noting not all the subtasks have been submitted; otherwise if all the subtasks have been submitted, receiving a corresponding investigation task conclusion returned by the main investigator.,

The computer-readable storage medium may be configured to be executed by the one or more processors to further perform the following operations subsequent to determining whether the corresponding initiator of the investigation request is the predetermined investigating role: when the corresponding initiator of the investigation request is not the predetermined investigating role, acquiring a target investigating role whose administrative region authority corresponds to an insurance institution to which an insurance policy associated with a settlement belongs, pushing the corresponding investigation task of the investigation request to a corresponding terminal of the target investigating role for assignment; otherwise when the corresponding target investigating role hasn't been acquired, pushing the investigation task to a predetermined administrative investigating role of an upper-level administrative region for assignment.

It is apparent to those skilled in the art that all or part of the operations of the above embodiments may be performed by hardware or by instructing the relevant hardware through a program. The program may be stored in a computer-readable storage medium which may be a read-only memory, a magnetic disk, an optical disc or the like.

It should be noted that, in the present application, terms "include", "comprise" and any other variants thereof are used to cover the non-excludability, so that processes, methods, goods or devices which include a series of elements may include not only these elements, but also other elements that shipping to list clearly, or inherent elements in the processes, the methods, the goods and the devices. In the absence of more restrictions, the elements defined by the statement "includes one..."or other similar are not excluded from the processes, methods, goods or devices of the elements.

Sequence numbers of the forgoing embodiments of the present application are merely used for description and do not represent the advantages and disadvantages of the embodiments.

Through the above description of the embodiments, it is apparent to those skilled in the art that the above-mentioned embodiments may be implemented by software and a necessary universal hardware platform, of course, the hardware may also be used, but in many cases, the former is a better choice. According to this, an essence of the technical solution of the present application or a contribution to the prior technology may be reflected in a form of computer software products, the computer software products may be stored in a storage medium (such as an ROM/RAM, a magnetic disc, a light disc), a number of instructions are included for enabling a mobile terminal to perform the methods in each embodiment of the present application.

The foregoing description merely depicts some illustrative embodiments of the present application and therefore is not intended to limit the scope of the application. An equivalent structural or flow changes made by using the content of the specification and drawings of the present application, or any direct or indirect applications of the disclosure on any other related fields shall all fall in the scope of the application.

## Claims

1. A method for investigating data, comprising:
starting an investigation application program preinstalled on a mobile terminal, receiving an investigation request in a display interface of the investigation application program, and determining whether a corresponding initiator of the investigation request is a predetermined investigating role;
receiving an assignment instruction to assign the investigation task when the corresponding initiator of the investigation request is the predetermined investigating role and a corresponding investigation task of the investigation request is a predetermined task; and
performing a corresponding transfer or assignment of the investigation task after determining the investigation task needs to be transferred or assigned, when the corresponding initiator of the investigation request is the predetermined investigating role and the corresponding investigation task of the investigation request is not the predetermined task.

2. The method of claim 1, wherein receiving the assignment instruction to assign the investigation task comprises:
receiving the assignment instruction to assign a plurality of different subtasks, and determining whether the assigned subtasks are predetermined tasks;
when the assigned subtasks are the predetermined tasks, receiving a corresponding investigation task conclusion returned from a corresponding main investigator of the subtasks after the main investigator completes the investigation task.

3. The method of claim 2, further comprising, subsequent to determining whether the assigned subtasks are the predetermined tasks:
when the assigned subtasks are not the predetermined tasks, determining whether a locally performed subtask is returned by the main investigator;
when the locally performed subtask is returned by the main investigator, receiving an investigation result returned from an auxiliary investigator;
when the locally performed subtask is not returned by the main investigator, determining whether all the subtasks have been submitted except the subtask performed by the main investigator;
if not all the subtasks have been submitted, outputting a related alert message noting not all the subtasks have been submitted;
otherwise if all the subtasks have been submitted, receiving a corresponding investigation task conclusion returned by the main investigator.

4. The method of claim 2, further comprising, subsequent to determining whether the assigned subtasks are the predetermined tasks:
when the assigned subtasks are not the predetermined tasks, determining whether a subtask is applied for by the main investigator;
when a subtask is applied for by the main investigator, determining whether the main investigator is to return his performed subtask; if the main investigator is to return his performed subtask, determining again whether a subtask is applied for by the main investigator; and if the main investigator is not to apply for a subtask, performing a transfer or assignment;
when the main investigator doesn't apply for a subtask, determining whether all the subtasks have been submitted except the subtask performed by the main investigator; if not all the subtasks have been submitted, outputting a related alert message noting not all the subtasks have been submitted; otherwise if all the subtasks have been submitted, receiving a corresponding investigation task conclusion returned by the main investigator.

5. The method of claim 2, further comprising, subsequent to determining whether the assigned subtasks are the predetermined tasks:
when the assigned subtasks are not the predetermined tasks, determining whether the main investigator reviews a subtask submitted by a predetermined investigating role in a foreign region;
when the main investigator reviews the subtask submitted by the predetermined investigating role in the foreign region, determining whether there is an auxiliary investigation task in the foreign region; if there isn't an auxiliary investigation task in the foreign region, determining a feedback of the predetermined investigating role in the foreign region is completed; otherwise if there is the auxiliary investigation task in the foreign region, receiving the subtask returned by an auxiliary investigator in the foreign region when there is the predetermined investigating role in the foreign region doing the review, or determining a feedback of the predetermined investigating role in the foreign region is completed when there isn't the predetermined investigating role in the foreign region doing the review;
when the main investigator doesn't review the subtask submitted by the predetermined investigating role in the foreign region, determining whether all the subtasks have been submitted except the subtask performed by the main investigator; if not all the subtasks have been submitted, outputting a related alert message noting not all the subtasks have been submitted; otherwise if all the subtasks have been submitted, receiving a corresponding investigation task conclusion returned by the main investigator.

6. The method of claim 1, further comprising, subsequent to determining whether the corresponding initiator of the investigation request is the predetermined investigating role:
when the corresponding initiator of the investigation request is not the predetermined investigating role, acquiring a target investigating role whose administrative region authority corresponds to an insurance institution to which an insurance policy associated with a settlement belongs, pushing the corresponding investigation task of the investigation request to a corresponding terminal of the target investigating role for assignment; otherwise when the corresponding target investigating role hasn't been acquired, pushing the investigation task to a predetermined administrative investigating role of an upper-level administrative region for assignment.

7. The method of claim 5, further comprising, subsequent to determining whether the corresponding initiator of the investigation request is the predetermined investigating role:
when the corresponding initiator of the investigation request is not the predetermined investigating role, acquiring a target investigating role whose administrative region authority corresponds an insurance institution to which an insurance policy associated with a settlement belongs, pushing the corresponding investigation task of the investigation request to a corresponding terminal of the target investigating role for assignment; otherwise when the corresponding target investigating role hasn't be acquired, pushing the investigation task to a predetermined administrative investigating role of an upper-level administrative region for assignment.

8. A device for investigating data, comprising:
a determination module, configured to start an investigation application program preinstalled on a mobile terminal, receive an investigation request in a display interface of the investigation application program, and determine whether a corresponding initiator of the investigation request is a predetermined investigating role;
a receiving module, configured to receive an assignment instruction and assign the investigation task when the corresponding initiator of the investigation request is the predetermined investigating role and the corresponding investigation task of the investigation request is a predetermined task; and
an execution module, configured to perform a corresponding transfer or assignment of the investigation task after determining the investigation task needs to be transferred or assigned, when the corresponding initiator of the investigation request is the predetermined investigating role and the corresponding investigation task of the investigation request is not the predetermined task.

9. The device of claim 8, wherein the receiving module comprising:
a first determination unit, configured to receive the assignment instruction to assign a plurality of different subtasks, and determining whether the assigned subtasks are predetermined tasks; and
a first receiving unit, configured to receive a correspond investigation task conclusion returned from a corresponding main investigator of the subtasks after the main investigator completes the investigation task.

10. The device of claim 9, wherein the receiving module further comprises:
a second determination unit, configured to determine whether a locally performed subtask is returned by the main investigator when the assigned subtasks are not the predetermined tasks;
a second receiving unit, configure to receive an investigation result returned from an auxiliary investigator when the locally performed subtask is returned by the main investigator; and
a first processing unit, configured to: determine whether all the subtasks have been submitted except the subtask performed by the main investigator when the locally performed subtask is not returned by the main investigator; if not all the subtasks have been submitted, output a related alert message noting not all the subtasks have been submitted; otherwise if all the subtasks have been submitted, receiving a corresponding investigation task conclusion returned by the main investigator.

11. The device of claim 9, wherein the receiving module further comprises:
a third determination unit, configured to determine whether a subtask is applied for by the main investigator when the assigned subtasks are not the predetermined tasks;
a second processing unit, configured to: determine whether the main investigator is to return his performed subtask when a subtask is applied for by the main investigator; if the main investigator is to return his performed subtask, determine again whether a subtask is applied for by the main investigator; and if the main investigator is not to apply for a subtask, perform a transfer or assignment; and
a third processing unit, configured to: determine whether all the subtasks have been submitted except the subtask performed by the main investigator, when the main investigator doesn't apply for a subtask; if not all the subtasks have been submitted, output a related alert message noting not all the subtasks have been submitted; otherwise if all the subtasks have been submitted, receive a corresponding investigation task conclusion returned by the main investigator.

12. The device of claim 9, wherein the receiving module further comprises:
a fourth determination unit, configured to determine whether the main investigator reviews a subtask submitted by a predetermined investigating role in a foreign region, when the assigned subtasks are not the predetermined tasks;
a fourth processing unit, configured to: determine whether there is an auxiliary investigation task in the foreign region when the main investigator reviews the subtask submitted by the predetermined investigating role in the foreign region; if there isn't an auxiliary investigation task in the foreign region, determine a feedback of the predetermined investigating role in the foreign region is completed; otherwise if there is the auxiliary investigation task in the foreign region, receive the subtask returned by an auxiliary investigator in the foreign region when there is the predetermined investigating role in the foreign region doing the review, or determine a feedback of the predetermined investigating role in the foreign region is completed when there isn't the predetermined investigating role in the foreign region doing the review; and
a fifth processing unit, configured to determine: whether all the subtasks have been submitted except the subtask performed by the main investigator when the main investigator doesn't review the subtask submitted by the predetermined investigating role in the foreign region; if not all the subtasks have been submitted, output a related message noting not all the subtasks have been submitted; otherwise if all the subtasks have been submitted, receive a corresponding investigation task conclusion returned by the main investigator.

13. The device of claim 8, further comprising:
a pushing module, configured to: acquire a target investigating role whose administrative region authority corresponds to an insurance institution to which an insurance policy associated with a settlement belongs and push the corresponding investigation task of the investigation request to a corresponding terminal of the target investigating role for assignment, when the corresponding initiator of the investigation request is not the predetermined investigating role; otherwise when the corresponding target investigating role hasn't been acquired, push the investigation task to a predetermined administrative investigating role of an upper-level administrative region for assignment.

14. The device of claim 12, further comprising:
a pushing module, configured to: acquire a target investigating role whose administrative region authority corresponds to an insurance institution to which an insurance policy associated with a settlement belongs and push the corresponding investigation task of the investigation request to a corresponding terminal of the target investigating role for assignment, when the corresponding initiator of the investigation request is not the predetermined investigating role; otherwise when the corresponding target investigating role hasn't been acquired, push the investigation task to a predetermined administrative investigating role of an upper-level administrative region for assignment.

15. A mobile terminal, comprising a processor and a memory, wherein the processor is configured to execute a data investigation program stored in the memory to perform the following operations:
starting an investigation application program preinstalled on the mobile terminal, receiving an investigation request in a display interface of the investigation application program, and determining whether a corresponding initiator of the investigation request is a predetermined investigating role;
receiving an assignment instruction and assigning the investigation task when the corresponding initiator of the investigation request is the predetermined investigating role and a corresponding investigation task of the investigation request is a predetermined task; and
performing a corresponding transfer or assignment of the investigation task after determining the investigation task needs to be transferred or assigned, when the corresponding initiator of the investigation request is the predetermined investigating role and the corresponding investigation task of the investigation request is not the predetermined task.

16. The mobile terminal of claim 15, wherein the processor is configured to execute the data investigation program stored in the memory to perform the following operations in receiving the assignment instruction to assign the investigation task:
receiving the assignment instruction to assign a plurality of different subtasks, and determining whether the assigned subtasks are predetermined tasks; and
when the assigned subtasks are the predetermined tasks, receiving a corresponding investigation task conclusion returned from a corresponding main investigator of the subtasks after the main investigator completes the investigation task.

17. The mobile terminal of claim 16, wherein the processor is further configured to execute the data investigation program stored in the memory to further perform the following operations subsequent to determining whether the assigned subtasks are the predetermined tasks:
when the assigned subtasks are not the predetermined tasks, determining whether a locally performed subtask is returned by the main investigator;
when the locally performed subtask is returned by the main investigator, receiving an investigation result returned from an auxiliary investigator;
when the locally performed subtask is not returned by the main investigator, determining whether all the subtasks have been submitted except the subtask performed by the main investigator;
if not all the subtasks have been submitted, outputting a related alert message noting not all the subtasks have not been submitted; and
otherwise if all the subtasks have been submitted, receiving a corresponding investigation task conclusion returned by the main investigator.

18. A mobile terminal of claim 16, wherein the processor is configured to execute the data investigation program stored in the memory to further perform the following operations subsequent to determining whether assigned subtasks are the predetermined tasks:
when the assigned subtasks are not the predetermined tasks, determining whether a subtask is applied for by the main investigator;
when a subtask is applied for by the main investigator, determining whether the main investigator is to return his performed subtask; if the main investigator is to return his performed subtask, determining again whether a subtask is applied for by the main investigator; and if the main investigator is not to apply for a subtask, performing a transfer or assignment;
when the main investigator doesn't apply for a subtask, determining whether all the subtasks have been submitted except the subtask performed by the main investigator; if not all the subtasks have been submitted, outputting a related alert message noting not all the subtasks have been submitted; otherwise if all the subtasks have been submitted, receiving a corresponding investigation task conclusion returned by the main investigator.

19. The mobile terminal of claim 16, wherein the processor is configured to execute the data investigation program stored in the memory to further perform the following operations subsequent to determining whether the assigned subtasks are the predetermined tasks:
when the assigned subtasks are not the predetermined tasks, determining whether the main investigator reviews a subtask submitted by a predetermined investigating role in a foreign region;
when the main investigator reviews the subtask submitted by the predetermined investigating role in the foreign region, determining whether there is an auxiliary investigation task in the foreign region; if there isn't an auxiliary investigation task in the foreign region, determining a feedback of the predetermined investigating role in the foreign region is completed; otherwise if there is the auxiliary investigation task in the foreign region, receiving the subtask returned by an auxiliary investigator in the foreign region when there is the predetermined investigating role in the foreign region doing the review, or determining a feedback of the predetermined investigating role in the foreign region is completed when there isn't the predetermined investigating role in the foreign region doing the review;
when the main investigator doesn't review the subtask submitted by the predetermined investigating role in the foreign region, determining whether all the subtasks have been submitted except the subtask performed by the main investigator; if not all the subtasks have been submitted, outputting a related alert message noting not all the subtasks have been submitted; otherwise if all the subtasks have been submitted, receiving a corresponding investigation task conclusion returned by the main investigator.

20. The mobile terminal of claim 15, wherein the processor is configured to execute the data investigation program stored in the memory to further perform the following operations subsequent to determining whether the corresponding initiator of the investigation request is the predetermined investigating role;
when the corresponding initiator of the investigation request is not the predetermined investigating role, acquiring a target investigating role whose administrative region authority corresponds to an insurance institution to which an insurance policy associated with a settlement belongs, pushing the corresponding investigation task of the investigation request to a corresponding terminal of the target investigating role for assignment; otherwise when the corresponding target investigating role hasn't been acquired, pushing the investigation task to a predetermined administrative investigating role of an upper-level administrative region for assignment.

21. A computer-readable storage medium storing one or more programs that are executable by one or more processors to perform the following operations:
starting an investigation application program preinstalled on a mobile terminal, receiving an investigation request in a display interface of the investigation application program, and determining whether a corresponding initiator of the investigation request is a predetermined investigating role;
receiving an assignment instruction to assign the investigation task, when the corresponding initiator of the investigation request is the predetermined investigating role and a corresponding investigation task of the investigation request is a predetermined task; and
performing a corresponding transfer or assignment of the investigation task after determining the investigation task needs to be transferred or assigned, when the corresponding initiator of the investigation request is the predetermined investigating role and the corresponding investigation task of the investigation request is not the predetermined task.

22. The computer-readable storage medium of claim 21, wherein the one or more programs are configured to be executed by the one or more processors to perform the following operations in receiving the assignment instruction to assign the investigation task:
receiving the assignment instruction to assign a plurality of different subtasks, and determining whether the assigned subtasks are predetermined tasks; and
when the assigned subtasks are the predetermined tasks, receiving a corresponding investigation task conclusion returned from a corresponding main investigator of the subtasks after the main investigator completes the investigation task.

23. The computer-readable storage medium of claim 22, wherein the one or more programs are configured to be executed by the one or more processors to further perform the following operations subsequent to determining whether the assigned subtasks are the predetermined tasks:
when the assigned subtasks are not the predetermined tasks, determining whether a locally performed subtask is returned by the main investigator;
when the locally performed subtask is returned by the main investigator, receiving an investigation result returned from an auxiliary investigator;
when the locally performed subtask is not returned by the main investigator, determining whether all the subtasks have been submitted except the subtask performed by the main investigator;
if not all the subtasks have been submitted, outputting a related alert message noting not all the subtasks have been submitted; and
otherwise if all the subtasks have been submitted, receiving a corresponding investigation task conclusion returned by the main investigator.

24. The computer-readable storage medium of claim 22, wherein the one or more programs are configured to be executed by the one or more processors to further perform the following operations subsequent to determining whether the assigned subtasks are the predetermined tasks:
when the assigned subtasks are not the predetermined tasks, determining whether a subtask is applied for by the main investigator;
when a subtask is applied for by the main investigator, determining whether the main investigator is to return his performed subtask; if the main investigator is to return his performed subtask, determining again whether a subtask is applied for by the main investigator; and if the main investigator is not to apply for a subtask, performing a transfer or assignment;
when the main investigator doesn't apply for a subtask, determining whether all the subtasks have been submitted except the subtask performed by the main investigator; if not all the subtasks have been submitted, outputting a related alert message noting not all the subtasks have been submitted; otherwise if all the subtasks have been submitted, receiving a corresponding investigation task conclusion returned by the main investigator.

25. The computer-readable storage medium of claim 22, wherein the one or more programs are configured to be executed by the one or more processors to further perform the following operations subsequent to determining whether the assigned subtasks are the predetermined tasks:
when the assigned subtasks are not the predetermined tasks, determining whether the main investigator reviews a subtask submitted by a predetermined investigating role in a foreign region;
when the main investigator reviews the subtask submitted by the predetermined investigating role in the foreign region, determining whether there is an auxiliary investigation task in the foreign region; if there isn't an auxiliary investigation task in the foreign region, determining a feedback of the predetermined investigating role in the foreign region is completed; otherwise if there is the auxiliary investigation task in the foreign region, receiving the subtask returned by an auxiliary investigator in the foreign region when there is the predetermined investigating role in the foreign region doing the review, or determining a feedback of the predetermined investigating role in the foreign region is completed when there isn't the predetermined investigating role in the foreign region doing the review;
when the main investigator doesn't review the subtask submitted by the predetermined investigating role in the foreign region, determining whether all the subtasks have been submitted except the subtask performed by the main investigator; if not all the subtasks have been submitted, outputting a related alert message noting not all the subtasks have been submitted; otherwise if all the subtasks have been submitted, receiving a corresponding investigation task conclusion returned by the main investigator.

26. The computer-readable storage medium of claim 21, wherein the one or more programs are configured to be executed by the one or more processors to further perform the following operations subsequent to determining whether the corresponding initiator of the investigation request is the predetermined investigating role:
when the corresponding initiator of the investigation request is not the predetermined investigating role, acquiring a target investigating role whose administrative region authority corresponds to an insurance institution to which an insurance policy associated with a settlement belongs, pushing the corresponding investigation task of the investigation request to a corresponding terminal of the target investigating role for assignment; otherwise when the corresponding target investigating role hasn't been acquired, pushing the investigation task to a predetermined administrative investigating role of an upper-level administrative region for assignment.
